# EUROPEAN PATENT APPLICATION

(11) **EP 1 304 876 A2**
(43) Date of publication of application: **23.04.2003**
(21) Application number: 02257327.3
(22) Date of filing: 22.10.2002
(51) Int. Cl.: H04N 5/445

(54) **System and method to provide additional information associated with selectable display areas**

(30) Priority: 22.10.2001 US 27997
(71) Applicant: ATI Technologies Inc., Markham, Ontario L3T 7X6 (CA)
(72) Inventor: Komar, Anton, Toronto, Ontario M4C 1V1 (CA); Tsang, Fai Ma, Scarborough, Ontario M1W 3M2 (CA)
(74) Representative: Howe, Steven

(57) **Abstract**

A system and method to display additional information, such as advertising, associated with a selectable display area displayed within a scene of a video stream are disclosed herein. A video stream having a fixed sequence of scenes having one or more selectable display areas is provided to a display controller. The display controller, in one embodiment, displays the video content having the fixed sequence of scenes, along with the selectable display areas within one or more scenes of the fixed sequence of scenes, on a display device. A viewer can select a selectable display area from the display device to instruct the display controller to perform an action associated with the selected selectable display area. In one embodiment, visual indicators, such as borders around the selectable display areas or icons representing the selectable display areas, are implemented to assist the viewer in identifying the selectable display areas within a displayed scene of the video content. Actions to be performed can include the retrieval and/or display of information, such as text, the content of a website, a 2-D or 3-D image, an order form, a survey, a video clip, and the like. An action to be performed can also include retrieving and/or playing an audio clip. In one embodiment, information utilised to perform the action is embedded as a part of the video stream. In other embodiments, the utilised information is retrieved from an external data source, such as a networked data server. A system and method to embed data associated with the selectable display areas within a video stream are also disclosed herein.

## Description

The present invention relates generally to processing video content and more particularly to providing information related to selectable display areas included in the video content.

Advertisements included in the video scenes of a video content are common vehicles for advertisers to inform viewers of their products and services. However, these advertisements are often intrusive and break the flow the video content, often annoying viewers. As a result, viewers often avoid viewing the advertisements by changing stations, leaving the room, turning down the volume, and the like. Viewers also can record the video content of a video stream for playback at a later time, thereby allowing them to fast-forward through the advertisements. As a result, the efficacy of the advertisements is reduced. Since the advertisements become less effective, advertisers generally reduce the amount they are willing to pay for these types of advertisements, resulting in a loss of revenue by the video stream provider.

To get around the intrusiveness of separate advertisements, advertisers have developed a method of integrating a product into the video scene itself, commonly referred to as "product placement". A typical example of product placement is for advertisers to pay a television producer to have its product prominently displayed in a scene of a popular television program. For example, a sports drink producer could pay a professional sports league to use its sports drink product during televised games. When the games are broadcast, the sports drink product is prominently displayed in scenes during the game, and advertisers hope that viewers will associate the sports drink with being a superb athlete. However, this method is limited as the viewer is unable to get additional information about the product based on the product placement. For example, while an advertisement can espouse the benefits of a product or provide pricing or ordering information, current methods of product placement of a product are inherently passive. As a result, the product placement may pique the viewer's interest temporarily, however the viewer has no recourse to obtain more information or to order the product. Consequently, the viewer generally loses interest quickly, reducing the effectiveness of the product placement.

Given the limitations, as discussed, it is apparent that conventional methods of advertising using a video medium are less than perfect.

According to one aspect of the present invention, a method comprises the steps of:
providing a fixed sequence of scenes to be displayed, at least one scene of the fixed sequence of scenes including at least a first selectable display area;
receiving data indicating that the first selectable display area has been selected; and,
performing a first action associated with the first selectable display area based on the received data.

According to a second aspect of the present invention, a method comprises the steps of:
identifying a first selectable display area within a video scene;
determining a first location of the first selectable display area within the video scene; and,
embedding, in a video stream, the video scene and the first location.

According to a third aspect of the present invention, a method comprises the steps of:
providing a fixed sequence of scenes of a video stream to be displayed, wherein at least one scene of the fixed sequence of scenes includes at least a first selectable display area;
providing a first visual indicator associated with the first selectable display area to be displayed, wherein the first visual indicator is to indicate an availability of a first action associated with the first selectable display area;
receiving data from a viewer, wherein the data is to indicate a selection of the first selectable display area; and
providing information associated with the first selectable display area to the viewer in response to the data.
According to a fourth aspect of the present invention, a system comprises:
providing a fixed sequence of scenes of a video stream to be displayed, wherein at least one scene of the fixed sequence of scenes includes at least a first selectable display area;
providing a first visual indicator associated with the first selectable display area to be displayed, wherein the first visual indicator is to indicate an availability of a first action associated with the first selectable display area;
receiving data from a viewer, wherein the data is to indicate a selection of the first selectable display area; and
providing information associated with the first selectable display area to the viewer in response to the data.

According to a fifth aspect of the present invention, a computer program includes instructions to manipulate a processor to:
provide a fixed sequence of scenes to be displayed, wherein at least one scene of the fixed sequence of scenes including at least a first selectable display area;
receive data indicating that the first selectable display area has been selected; and,
perform a first action associated with the first selectable display area based on the input.

According to a sixth aspect of the present invention, a system comprises:
a processor;
memory operably coupled to said processor; and
a program of instructions to be stored in said memory and executed by said processor, said program of instructions including instructions to manipulate said processor to:
   provide a fixed sequence of scenes to be displayed, wherein at least one scene of the fixed sequence of scenes including at least a first selectable display area;
   receive data indicating that the first selectable display area has been selected; and
   perform a first action associated with the first selectable display area based on the input.

The present invention will be described, by way of example, with reference to the accompanying drawings, in which:
FIG. 1 is a block diagram illustrating a system to provide additional information associated with one or more selectable display areas according to at least one embodiment of the present invention;
FIG. 2 is a block diagram illustrating a display format for video content according to at least one embodiment of the present invention;
FIG. 3 is a block diagram illustrating a display controller of the system of FIG. 1 in greater detail according to at least one embodiment of the present invention;
FIG. 4 is a block diagram illustrating a video parser of the display controller of FIG. 3 in greater detail according to at least one embodiment of the present invention;
FIG. 5 is block diagram illustrating an action execution module of the display controller of FIG. 3 in greater detail according to at least one embodiment of the present invention;
FIG. 6 is a block diagram of a system to embed information associated with one or more selectable display areas within a video stream according to at least one embodiment of the present invention;
FIG. 7 is a flow diagram illustrating a method to utilise the system of FIG. 6 to embed information associated with one or more selectable display areas within a video stream according to at least one embodiment of the present invention;
FIG. 8 is a flow diagram illustrating a method to display video content having one or more selectable display areas according to at least one embodiment of the present invention; and
FIG. 9 is a flow diagram illustrating a method to perform an action associated with a selectable display area selected by a viewer according to at least one embodiment of the present invention.

In accordance with at least one embodiment of the present invention, a fixed sequence of scenes of a video stream is displayed, wherein at least one scene of the fixed sequence of scenes includes at least a first selectable display area. Input indicating that the first selectable display area has been selected is received, and a first actions associated with the first selectable display area is performed based on the input. One advantage in accordance with a specific embodiment of the present invention is that information associated with a product can be provided to a viewer without interfering with the viewing of video content. Another advantage is that more information about a product can be provided to a viewer than with conventional advertising methods.

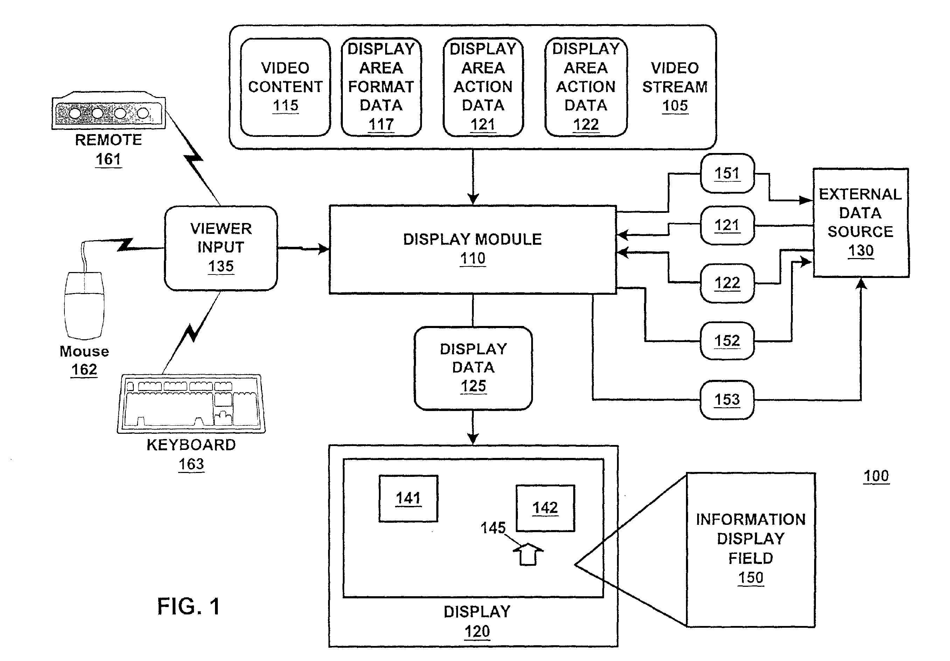

FIGS. 1-9 illustrate a system to display additional information, such as advertising, associated with a selectable display area displayed within a scene of a video stream, as well as methods for its use. A video stream having a fixed sequence of scenes having one or more selectable display areas is provided to a display controller. The display controller, in one embodiment, displays the video content (having one or more video scenes), along with the selectable display areas within one or more scenes of the fixed sequence of scenes, on a display device. A viewer can select a selectable display area from the display device to instruct the display controller to perform an action associated with the selected selectable display area. In one embodiment, visual indicators, such as borders around the selectable display areas or icons representing the selectable display areas, are implemented to assist the viewer in identifying the selectable display areas within a displayed scene of the video content. Actions to be performed can include the retrieval and/or display of information, such as text, the content of a website, a 2-D or 3-D image, an order form, a survey, a video clip, and the like. An action to be performed can also include retrieving and/or playing an audio clip. In one embodiment, information utilised to perform the action is embedded as a part of the video stream. In other embodiments, the utilised information is retrieved from an external data source, such as a networked data server. FIGS. 1-9 also illustrate a system to embed data associated with the selectable display areas within a video stream, as well as a method for its use.

Referring now to FIG. 1, a system to access information associated with one or more selectable display areas within a scene of video content is illustrated according to at least one embodiment of the present invention. The term "selectable display area", as used herein, refers an area within the display of a scene of video content representative of an object or item having additional information that could interest a viewer of the video display. For example, a video content displayed on a television could have a scene wherein an actor is drinking from a soft drink can. In this example, a selectable display area can include an area of the television associated with the soft drink can image, such as the pixels used to display the soft drink can image. As discussed in greater detail herein, a viewer could then select the soft drink can image (as a selectable display area) on the television and perform an action associated with the soft drink can, such as retrieve a 3-D image of the soft drink can from a file server and display the 3-D image. Product information system 100 includes display module 110 and display device 120. In at least one embodiment, product information system 100 also includes external data source 130.

In at least one embodiment, video stream 105 is provided to display module 110 by a video transmission source (not shown), such as a television broadcaster, a cable television provider, a web server, a digital versatile disc (DVD) player, and the like. Video stream 105, in one embodiment, includes video content 115 and display area format data 117. Video content 115 includes video content to be displayed on display device 120, wherein the video content includes one or more video scenes having one or more selectable display areas 141-142. For example, video content 115 could include movie content from a DVD, television content from a television program, and the like. It will be appreciated that some types of video scenes are generated based on the viewer's input. For example, the action in a scene from a video game is a result of the video game user's input, such as manipulating a joystick or pressing buttons. The video from the video game that appears on a viewing device is generated based on this input, and as a result, may differ each time the game is played again. In at least one embodiment, video content 115 includes a "fixed sequence" of scenes. The term "fixed sequence of scenes", as used herein, refers to a sequence of scenes that was generated independent of a viewer's input, such as television programs, movies, televised events, and the like. Unlike most computer games and video games, the content of a fixed sequence of scenes are not affected by viewer input since they are not generated nor modified by a viewer's actions.

Display area format data 117 includes format data for one or more selectable display areas 141-142, such as icon bitmap information, one or more actions associated with selectable display areas 141-142, and the like. Note two selectable display areas, selectable display areas 141-142, are described herein for ease of illustration. However, the number of selectable display areas that can be utilised according to various embodiments of the present invention is not limited to two selectable display areas. For example, video content 115 can contain only one selectable display area or more than two selectable display areas. It will also be appreciated that no selectable display areas may be present in some scenes of video content 115. Any reference herein made to selectable display areas 141-142 also applies to a single selectable display area and/or a plurality of selectable display areas greater than two, unless otherwise noted.

Display module 110 can include a variety of video devices, such as a graphics chip or graphics card of a computer, a set top box for a television, a cable descrambler, a television-Internet interface, and the like. Display module 110, in one embodiment, is implemented as a set of instructions, stored in memory, and executed by a processor. For example, display module 110 could be implemented as a set of instructions executed by a television tuner card on a workstation or as a software application run on a personal computer. Display module 110, in one embodiment, identifies the one or more selectable display areas 141-142 of video content 115 and identifies their locations on display device 120. Display module 110 can also format the display of selectable display areas 141-142 on display device 120, if necessary. For example, as described in greater detail subsequently, display module 110 can add visual indicators, such as borders, to selectable display areas 141-142 when displayed on display device 120. However, in one embodiment, video content 115 already includes the proper display format, such as the addition of borders, to selectable display areas 141-142 when it is provided to display module 110 as part of video stream 105. Video content 115 and any additional graphical formatting performed on selectable display areas 141-142 is then transmitted, as display data 125, for display on display device 120. Display device 120 can include a variety of display devices, such as a computer monitor, a television, a laptop display, a liquid crystal display (LCD), and the like.

In at least one embodiment, a viewer can select one of selectable display areas 141-142 to perform an action associated with the selected selectable display area, such as retrieve and display additional information associated with the selected selectable display area. In at least one embodiment, a viewer selection device, such as remote control 161, mouse 162, or keyboard 163, is utilised by the viewer, in conjunction with display device 120, to select one of selectable display areas 141-142 using display device 120. For example, a viewer could use remote control 161 or mouse 162 to manoeuvre cursor 145 around the display screen of display device 120. To assist the viewer in identifying selectable display areas 141-142 on display device 120, a visual indicator can be associated with one or more of selectable display areas 141-142 to indicate to the viewer that one or more actions associated with the one or more selectable display areas 141-142 are available. Examples of visual indicators can include icons representing selectable display areas 141-142, coloured borders surrounding selectable display areas 141-142, a change in a display property of cursor 145 or a light that brightens when cursor 145 passes over selectable display areas 141-142, and the like. For example, selectable display areas 141-142 could have a brightly coloured border that contrasts with the remainder of the scene being displayed on display device 120. As another example, cursor 145 could noticeably change colours when a viewer manoeuvres cursor 145 over one of selectable display areas 141-142.

Once the viewer has identified one of selectable display areas 141-142 to have an action associated with the identified selectable display area performed, the viewer can select the identified selectable display area using the viewer input device. For example, the viewer could place cursor 145 over selectable display area 141 and select selectable display area 141 by double-clicking the left mouse key of mouse 162. Similarly, a numbered list or numbered icons can be implemented to represent selectable display areas 141-142. In this case, the viewer could enter a number associated with the selected selectable display area using the keypad of remote control 161 or keyboard 163. The viewer's selection is transmitted to display module 110 as viewer input 135. Viewer input 135 can include the number selected if a viewer has entered a number using a keypad or the location of cursor 145 on display device 120 is a viewer has manoeuvred cursor 145 to select one of selectable display areas 141-142.

Display module 110, in at least one embodiment, receives viewer input 135 and performs an action associated with the selected selectable display area of the plurality of selectable display areas 141-142. Actions to be performed can include obtaining and/or displaying information associated with a selected selectable display area, loading a form, such an ordering form, playing a video or audio clip, and the like. For example, if a viewer were to select a pair of sunglasses (one embodiment of a selectable display area) from a scene on display device 120, an action associated with the pair of sunglasses can include the display of the content of the website of the manufacturer of the pair of sunglasses. The information used to perform an action associated with selectable display areas 141-142, in one embodiment, is embedded within video stream 105 as display area action data 121-122, respectively. In this case, display module 110 could store display area action data 121-122 in a buffer or on a storage device until needed. In at least one embodiment, the type of action to be performed, as well as some or all of the information needed to perform the action, is provided as display area format data 117. For example, an action associated with selectable display area 141 can include retrieving and displaying an order form for the product represented by selectable display area 141. In this case, display area format data 117 could include a value representing the action of retrieving order form data from external data source 130, a value representing the location of the order form data in a buffer, and a value representing the action of displaying the order form. A separate display area format data 117 can include information for each of a plurality of selectable display areas 141-142, or display area format data 117 can include format and action data for some or all of selectable display areas 141-142. For example, display area format data 117 can include a selectable display area identification (ID) associated with each of selectable display areas 141-142, their corresponding one or more actions, and information needed for these actions, such as a uniform resource locater (URL) address, a file name, and the like.

Alternatively, in at least one embodiment, the information (display area action data 121-122) utilised by display module 110 is obtained from external data source 130. For example, external data source 130 could include a file server that is to provide 3-D images of advertiser's products (selectable display areas 141-142) included in scenes of video content 115. External data source 130 can include a variety of data sources, such as a networked data server, a cable provider, a database stored on a storage device such as a hard disc, and the like. For example, the action associated with selectable display area 141 can include the retrieval of a web page from a web server on the Internet and the action associated with selectable display area 142 can include the retrieval of a video clip from the same web server. In this example, if a viewer selects selectable display area 141, display module 110 can send external data request 151 to the web server (external data source 130) to request the web page. The web server can then transmit the web page content (display area action data 121) to display module 110. Likewise, if a viewer selects selectable display area 142, display module 110 can send external data request 152 to the web server (external data source 130) to request the video clip (display area action data 122), which is then transmitted by the web server to display module 110.

In embodiments wherein performing an action associated with one of selectable display areas 141-142 includes displaying information, such as text, a web page, images, and/or a video clip, information display field 150 can be used to display the information. Information display field 150 can include a display window separate from the display window or display screen used to display video content 115. Likewise, information display field 150 can include a window within the display window used to display video content 115, such as the picture-in-picture format used by many televisions. Alternatively, in at least one embodiment, information display field 150 includes a separate display device 120. For example, video content 115 could be displayed on a first display device 120. When a viewer selects one of selectable display areas 141-142 to obtain additional information from a scene of video content 115 displayed on the first display device 120, the additional information is displayed in information display field 150 on a second display device 120.

As discussed previously, in one embodiment, an action associated with one of selectable display areas 121-122 includes displaying a form, such as an order form or a survey. For example, video content 115 could include a television program depicting a person cleaning a bathroom. The television program could include a featured household cleaning product (an example of selectable display area 141) that a viewer can select to order. When a viewer selects the household cleaning product (selectable display area 141) displayed on display device 120, display module 110 receives the viewer's input (viewer input 135) and can send external data request 151 to a data server (external data source 130) provided by the manufacturer of the household cleaning product. The data server can then transmit the order form data (display area action data 121) to display module 110. Display module 110 can render the order form data (display area action data 121) into an order form and display the order form in information display field 150 of display device 120. The viewer can then fill in the fields of the order form, such as a name field, an address field, and a payment field, and then select a submit button to submit the information filled out in the order form as submitted information 153. Display module 110 can then send submitted information 153 to the data server (external data source 130) for processing to generate an order for the featured household cleaning product to be delivered to the viewer.

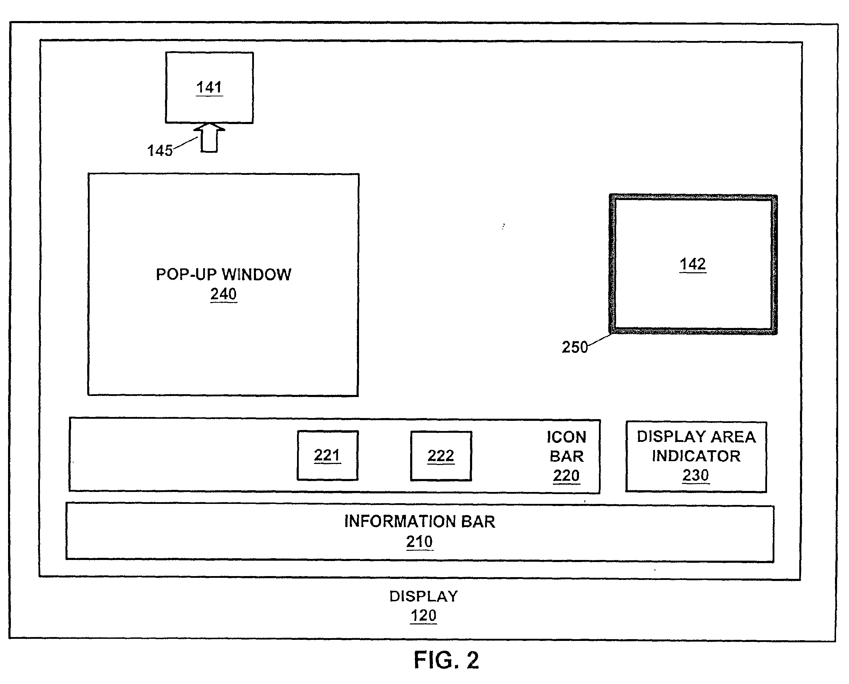

Referring now to FIG. 2, the display video content including one or more scenes having one or more selectable display areas is illustrated in greater detail according to at least one embodiment of the present invention. Recall that, in one embodiment, video content 115 (FIG. 1) having a plurality of selectable display areas 141-142 is displayed on display device 120. In at least one embodiment, display device 120 includes a number of sections, such as information bar 210, icon bar 220, display area indicator 230, and pop-up window 240, used to facilitate the identification of selectable display areas 141-142 and/or the performance of an action associated with selectable display areas 141-142. For example, as discussed previously, a viewer can perform an action, such as obtaining and displaying additional information, associated with one of selectable display areas 141-142 of video content 115 (FIG. 1). In at least one embodiment, the viewer initiates the performing of the action by selecting one of selectable display areas 141-142. As discussed previously, the viewer can utilise cursor 145 (manoeuvred by remote control 161, mouse 162, or keyboard 163, FIG. 1) to select the one of selectable display areas 141-142.

To aid the viewer in identifying one or more of selectable display areas 141-142, a number of visual indicators can be utilised. In one embodiment, borders 250 can be used to mark one or more of selectable display areas 141-142. Border 250 can include a coloured or shaded border surrounding, in whole or in part, one of selectable display areas 141-142. Border 250 is used, in general, to bring attention to the associated selectable display area. For example, if selectable display area 142 and the surrounding pixels include primarily darker colours, then border 250 could include a light coloured border, thereby contrasting border 250 with the surrounding video. Rather than, or in addition to, using borders 250 to mark or bring attention to selectable display areas 141-142, a change in a visual property of cursor 145 can be used. For example, when cursor 145 is in proximity to one of selectable display areas 141-142, cursor 145 could change colour, change size, change shape, and the like, to indicate that cursor 145 is proximal to the location of one of selectable display areas 141-142. Likewise, the visual properties of selectable display areas 141-142 could change. For example, when cursor 145 passes over selectable display area 141, the pixels representing selectable display area 141 could brighten, border 250 associated with selectable display area 141 could brighten, and the like.

Alternatively, in one embodiment, a selectable display area list (not shown) is used to list selectable display areas 141-142. In this case, the selectable display area list could be displayed in information bar 210 and the viewer could scroll through the list or, if the selectable display area list is numbered, enter the number associated with the desired selectable display area 141-172 from the selectable display area list using the keypad of remote control 161 or keyboard 163. Likewise, in at least one embodiment, a plurality of icons 221-222 representing selectable display areas 141-142, respectively, could be displayed in icon bar 220. A viewer could then use cursor 145 to select one of icons 221-222 to initiate an action associated with the respective selectable display area. If icons 221-222 are numbered, a viewer could select the number associated with one of icons 221-222 using the keypad of remote control 161 or keyboard 163.

In at least one embodiment, display area indicator 230 is used to signal the presence of one or more selectable display areas 141-142 to a viewer. Display area indicator 230 could include a logo or indicator light that appears in the corner of display device 120 when one or more of selectable display areas 141-142 are present on display device 120 at a given time. Similarly, display area indicator 230 could change its display characteristics whenever cursor 145 is collocated with one of selectable display areas 141-142. Additionally, display area indicator 230 could indicate the number of selectable display areas 141-142 present at a given time. For example, display area indicator 230 could include a numeric display that displays the number of selectable display areas 141-142, or display area indicator 230 could include a number of indicator lights equivalent to the number of selectable display areas 141-142. Other methods of marking or indicating the presence of selectable display areas 141-142 may be used without departing from the spirit or the scope of the present invention.

In at least one embodiment, a visual property of selectable display areas 141-142, border 250, and/or icons 221-222 is used to indicate the type of action associated with selectable display areas 141-142. For example, selectable display area 141 could have an associated action that includes the retrieval of web page content, whereas selectable display area 142 could have an associated action that includes the display of an order form. In this case, border 250 around selectable display area 141 could have one colour indicating an information retrieval action, whereas border 250 around display area 142 could have a second colour indicating an action to display an order form. Similarly, one or more of selectable display areas 141-142 could have multiple associated actions. In this case, the multiple actions could be listed in pop-up window 240 when one of selectable display areas 141-142 is selected. For example, selectable display area 141 could have both an order form display action and a video clip display action. Both actions could be displayed as choices in a list in pop-up window 240, and a viewer could select from the actions by scrolling through the list or entering a number associated with an action using the keypad of remote control 161 or keyboard 163.

Pop-up window 240, in one embodiment, can also be used to display the results of a performed action (as discussed previously with respect to information display field 150, FIG. 1). For example, a viewer could select the action of retrieving and playing a video clip associated with a child's toy (selectable display area 141) from a scene from a movie (video content 115, FIG. 1). In this case, display module 110 (FIG. 1) could request the video clip (display area action data 121, FIG. 1) from the indicated video clip server (external data source 130, FIG. 1) and display the video clip using pop-up window 240 when the video clip is received. Pop-up window 240 can also be used to display 2-D and 3-D images, forms, text, content from a website, and other visual information associated with selectable display areas 141-142.

Conventional advertising often interferes with the viewing of video content 115 since it can break the flow of video content 115. Likewise, it will be appreciated that the display of the results of an action associated with one of selectable display areas 141-142, such as the display of additional information obtained from external data source 130 (FIG. 1), may interfere with a viewer's viewing of video content 115 (FIG. 1). For example, if a viewer was watching scenes from a television program (video content 115) and was to select a soft drink product (selectable display area 141) shown in one scene of the television program and request additional information associated with the soft drink product using a method according to one embodiment of the present invention, the additional information, when displayed in pop-up window 240, could obscure the viewer's view of the underlying television program as it continues to be displayed. A viewer, in some instances, could be distracted even if the additional information is displayed in a separate window or on a separate display device 120 (FIG. 1), since the viewer must change focus between the two windows or displays. Accordingly, in at least one embodiment, video content 115 is "paused" while the results of an action associated with one of selectable display areas 141-142 is performed. After a viewer indicates a desire to return to video content 115, such as by closing pop-up window 240, the display of video content 115 is resumed. In embodiments wherein video stream 105 (FIG. 1) is transmitted on a "real time" basis, such as a television broadcast or cable broadcast, video stream 105 can be buffered while paused to allow a time-shift in the display of video content 115. A number of commercially available devices, such as TiVo® by Tivo, Inc., are available to time-shift broadcast video content (video content 115) and may be implemented by, or used in concert with, various embodiments of the present invention.

Alternatively, instead of having a temporary window (pop-up window 240) appear to display the results of an action performed, in one embodiment, information bar 210 is used. Information bar 210 includes a section of display device 120 that is continuously available for displaying action results. For example, when a wide-screen format movie (video content 115, FIG. 1) is displayed on a standard television (display device 120), there are often two horizontal bars where no movie content appears, one across the top of the television display and one on the bottom, since the dimensions of the television and the wide-format of the movie differ. Accordingly, information bar 210 could be implemented in either or both of these horizontal bars without obstructing a viewer's view of the movie (video content 115). In this case, some or all of the information associated with one or more of selectable display areas 141-142 could be automatically displayed in information bar 210 as it is received. For example, assume that advertising text (display area action data 121, FIG. 1) associated with a food product (selectable display area 141) of a scene of video content 115 (FIG. 1) is embedded in video stream 105 (FIG. 1) and information bar 210 is available on display device 120. In this case, the advertising text could be parsed from video stream 105 and automatically displayed in information bar 210 whenever the food product is shown in a scene on display device 120. Likewise, information bar 210 could be used to display forms, such as order forms and surveys, to display the content of a website, to show a short video clip, and the like. In one embodiment, the display of video content 115 (FIG. 1) is scaled on display device 120 to provide an area for information bar 210 to be displayed. For example, if video content 115 included a movie having a format that covers the entire display area of display device 120, video content 115 could be scaled slightly smaller in the vertical direction to provide an area at the bottom of display device 120 where information bar 210 can be displayed.

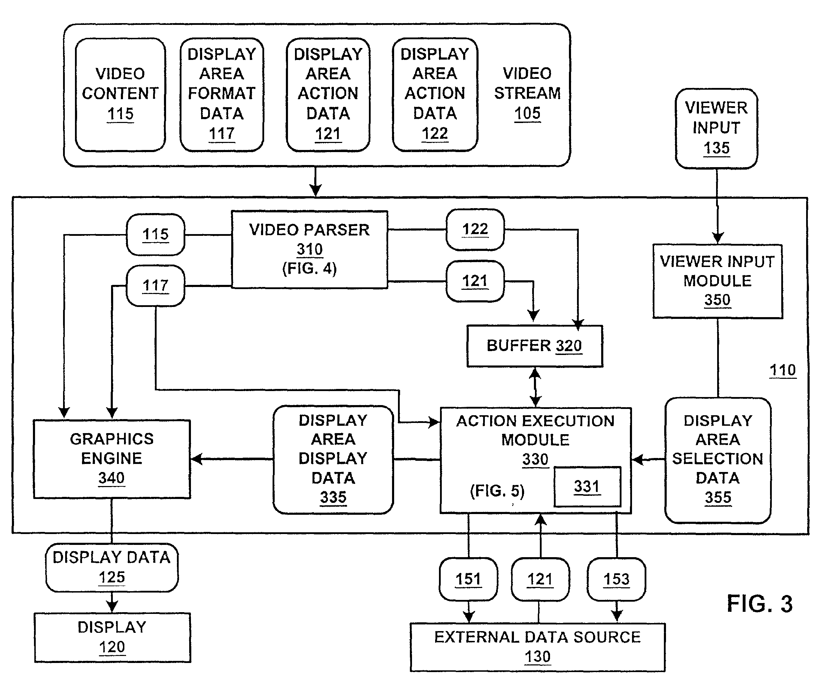

Referring to FIG. 3, display module 110 is illustrated in greater detail according to at least on embodiment of the present invention. Display module 110 includes video parser 310, buffer 320, action execution module 330, graphics engine 340, and viewer input module 350. As discussed previously, display module 110, in one embodiment, receives video stream 105, where video stream 105 includes video content 115 and display area format data 117. In one embodiment, video parser 310 parses video stream 105 into video content 115 and display area format data 117. Recall that video content 115 is representative of video content (including one or more selectable display areas 141-142, FIG. 1) to be displayed on display device 120 and display area format data 117 includes data to be used to format the display of the one or more selectable display areas 141-142 and/or to indicate one or more actions associated with the one or more selectable display areas 141-142. In embodiments wherein video stream 105 includes the information (display area action data 121-122) utilised by display module 110 to perform one or more actions associated with selectable display areas 141-142, video parser 310 can also parse display area action data 121-122 from video stream 105. Display area action data 121-122 can be stored in buffer 320, where buffer 320 can include random access memory (RAM), cache, one or more registers, a data storage device, and the like. Recall that, in other embodiments, display area action data 121-122 is obtained from external data source 130 (FIG. 1).

Viewer input module 350, in one embodiment, receives and processes viewer input 135 to generate display area selection data 355. Recall that viewer input 135 is representative of a selection of one of selectable display areas 141-142 (FIG. 1) made by a viewer. Viewer input 135 can include a number corresponding to one of selectable display areas 141-142. For example, assume that information bar 210 (FIG. 2) displays a list of selectable display areas 141-142, wherein selectable display area 141 is represented by the number 1 on the list and selectable display area 142 is represented by the number 2. A viewer could use an infrared remote control (remote control 161, FIG. 1) to input the number 1 corresponding to selectable display area 141 using the keypad of the infrared remote control. In this case, viewer input module 350 could receive the infrared transmission from the infrared remote control and convert it to a selectable display area ID, discussed in greater detail herein, used to identify selectable display area 141. The selectable display area ID could then be output as part of display area selection data 355. Similarly, in at least one embodiment, cursor 145 (FIG. 1) is used to select one of selectable display areas 141-142 (FIG. 1). In this case, when a viewer initiates an input, such as clicking of a button on mouse 162 (FIG. 1), viewer input module 350 can determine the position of cursor 145 and transmit a value representing the position of cursor 145 to action execution module 330 as display area selection data 355.

As previously discussed, in at least one embodiment, one or more of selectable display areas 141-142 have multiple possible actions that can be performed. In this case, a viewer can select one of the multiple possible actions to be performed by entering a number corresponding to the desired action, selecting an action from a list, and the like. Viewer input module 350, in this case, can include an action code representative of the selected action as part of display area selection data 355.

Display area selection data 355 can be utilised by action execution module 330 to generate display area display data 335. Action execution module 330, in one embodiment, performs an action associated with one of selectable display areas 141-142 (FIG. 1) selected by a viewer. Accordingly, action execution module 330 could utilise the selectable display area ID and/or action code of display area selection data 355 to determine the action to be performed. For example, action execution module 330 can include look-up table (LUT) 331 having one or more selectable display area ID fields corresponding to one or more selectable display areas 141-142. LUT 331 can include an action field corresponding to each of these selectable display area ID fields, where the action field could indicate the type of action to be performed. Additionally, each action filed associated with a selectable display area ID field could also have an action information field, where the action information field includes data necessary to perform the specified action. For example, an action associated with selectable display area 141 could include the retrieval of web page content from a web server. In this case, the action information field associated with this action for selectable display area 141 could include the URL of the web page.

Similarly, in embodiments wherein display area selection data 355 includes the position of cursor 145 (FIG. 1), as discussed previously, action execution module 330 can determine the position of cursor 145 in relation to the position of selectable display areas 141-142 on display device 120. If cursor 145 is within a reasonable proximity to one of selectable display areas 141-142, action execution module 330 can assume that the viewer has selected the nearest one of selectable display areas 141-142 to initiate an action associated with the selected selectable display area. It will be appreciated that the method implemented in this embodiment is similar to, or equivalent to, methods implemented by graphical viewer interfaces, such as web browsers, to receive viewer input. As with the selection of one of selectable display areas 141-142 using the associated selectable display area ID sent as display area selection data 355, action execution module 330 can determine the action to be performed and/or any information used to perform the action by using the selectable display area ID to search LUT 331.

In at least one embodiment, LUT 331 is generated from display area format data 117 of video stream 105. Display area format data 117 could include the selectable display area IDs of the one or more selectable display areas 141-142 displayed on display device 120 within a given time period, possible actions associated with each of selectable display areas 141-142, and information necessary to perform an action, such as the network address of a data server (external data source 130), and the like. In one embodiment, a different display area format data 117 is sent as part of video stream 105 for each of selectable display areas 141-142 instead of a single display area format data 117 having information for all of selectable display areas 141-142 present during any given time period. It will be appreciated that the properties of selectable display areas 141-142 may change through the course of the display of video content 115 (FIG. 1), as can the presence of actual selectable display areas 141-142 themselves. For example, one or more selectable display areas 141-142 can be introduced or removed when the scene changes. For example, a toaster oven (one of selectable display areas 141-142) could be present in a scene of a movie depicting characters having breakfast in a kitchen. However, when the scene changes to another setting outside of the kitchen, the toaster oven would no longer be included in the scene, and therefore is not displayed on display device 120. Accordingly, in at least one embodiment, an updated display area format data 117 is transmitted as part of video stream 105 whenever the properties of selectable display areas 141-142 change. For example, an updated display area format data 117 could be sent with each frame of video content 115 in video stream 105. LUT 331 can then be updated using the updated display area format data 117.

As discussed previously, actions associated with selectable display areas 141-142 (FIG. 1) can include the retrieval and/or display of various types of additional information related to the selected selectable display area. For example, a viewer could select a sports drink (one of selectable display areas 141-142) featured in a scene of video (video content 115, FIG. 1) displayed on display device 120. One action associated with the sports drink could include the display of nutritional information about the sports drink. Another action associated with the sports drink could include the playing of an audio clip representing a radio commercial for the sports drink. Other data or information that can be displayed can include, webpage or website content, images, a video clip, and the like. Other actions can include the display of a form, such as an order form or a survey. In this case, action execution module 330 can retrieve the data necessary to generate the form and generate the form from this data. The viewer could then enter data into the fields of the form and the entered data could be sent to a recipient as submitted information 153. In this case, the action information field of the corresponding selectable display area of LUT 331 could include the recipient's location.

In one embodiment, the additional information (display area action data 121-122) for selectable display areas 141-142 (FIG. 1) is transmitted as part of video stream 105. As discussed previously, display area action data 121-122 can be parsed from video stream 105 by video processor 310 and then stored in buffer 320. In this case, action module 330 can retrieve one of display area action data 121-122 associated with the one of selectable display areas 141-142 selected by the viewer. In other embodiments, the additional information (display area action data 121-122) is retrieved from external data source 130. For example, a viewer could select selectable display area 141 for display of additional information associated with selectable display area 141, where the additional information includes webpage content (display area action data 121) from a website. Action module 330 can retrieve the URL of the web server (external source 130) hosting the website from the action information field associated with selectable display area 141 in LUT 331. Action module 330 can then send external data request 151 to the web server, requesting the webpage content. The web server can then transmit the webpage content (display area action data 121) to display module 110 for utilisation by action execution module 330.

Action execution module 330, in one embodiment, generates display area display data 335 based on an action performed and the information (display area action data 121-122) resulting from the performance of the action, if any. Display area display data 335 can include the resulting information, display format information, and the like. For example, if the action performed based on a viewer's selection of selectable display area 141 includes the retrieval and display of a video clip (display area action data 121) from a data server (external data source 130), display area display data 335 could include the video clip data and formatting data indicating the display mode of the video clip on display device 120. The video clip, in this case, could be displayed in pop-up window 240 (FIG. 2) of display device 120, in a separate window on display device 120, or on a display device 120 separate from the display device 120 used to display video content 115 (FIG. 1). The formatting data of display area display data 335 could include a code or value indicating which display mode, such as pop-up window 240, is to be used to display the video clip.

Graphics engine 340, in one embodiment, receives and renders video content 115 and display area display data 335 to generate display data 125. Graphics engine 340 can include a video processor, graphic chip, graphics card, video controller, and the like. Graphics engine 340, in the absence of any of selectable display areas 141-142 (FIG. 1) present in video content 115 at a given time, conventionally renders video content 115 to generate display data 125 for display on display device 120. However, when scenes of video content 115 to be displayed include one or more of selectable display areas 141-142, graphics engine 340, in one embodiment, renders the appearance of selectable display areas 141-142 according to their associated display properties included as part of display area format data 117. For example, display area format data 117 could indicate that selectable display area 141, when displayed, is to have a blue border 250 (FIG. 2) while the pixels of selectable display area 142, when displayed, are to have a luminance greater than the surrounding pixels. Accordingly, graphics engine 340 renders the display format of the one or more selectable display areas 141-142 and integrates the changed display appearances of the one or more selectable display areas 141-142 with the remainder of video content 115 to generate display data 125.

In one embodiment, the display properties of selectable display areas 141-142 (FIG. 1) and the display of the results of their associated actions can be determined by a viewer. For example, a viewer could enter a set up screen on display device 120 and indicate that selectable display areas 141-142 are to be indicated using borders 250 (FIG. 2). Accordingly, graphics engine 340 can utilise the viewer's preferences to render the display properties of selectable display areas 141-142. Instead of formatting the display of selectable display areas 141-142 by graphics engine 340, in one embodiment, video content 115 already having the desired display properties of selectable display areas 141-142 is provided to display module 110 as part of video stream 105. For example, video stream 105 could include video content 115 already including selectable display area 141 with a blue border 250 and selectable display area 142 having relatively high-luminance pixels.

Graphics engine 340, in one embodiment, renders the results of an action performed for display on display device 120. For example, display area display data 335 could include form data (display area action data 121-122) and a code indicating that graphics engine 340 is to render an order form using the form data and to display the order form in pop-up window 240 (FIG. 2). In this case, graphics engine 340 would render pop-up window 240 having the order form and integrate it with video content 115 to generate display data 125. Similarly, graphics engine 340, in one embodiment, renders various fields of display device 120, such as icon bar 220 (FIG. 2), icons 221-222 (FIG. 2), display area indicator 230 (FIG. 2), information bar 210 (FIG. 2), and the like. For example, graphics engine 240 could use bit-maps included as part of display area format data 117 to render icons 221-221, corresponding to selectable display areas 141-142, and icon bar 220 for display in display device 120.

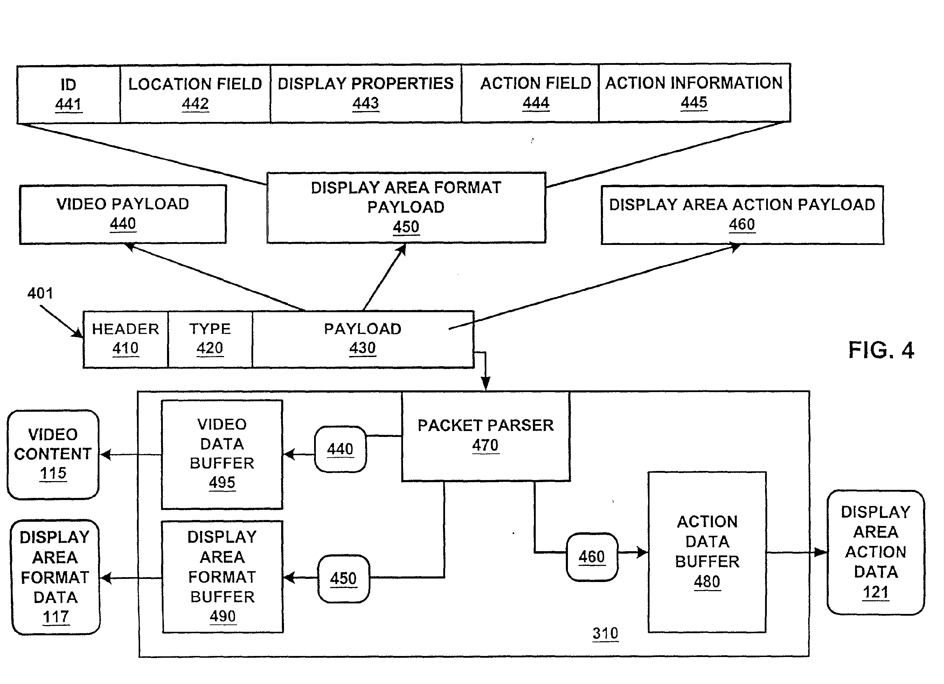

Referring to FIG. 4, video parser 310 is illustrated in greater detail according to at least one embodiment of the present invention. As discussed previously, video parser 310 can parse video stream 105 (FIG. 1) into video content 115 (FIG. 1), display area format data 117, and/or display area action data 121-122. In one embodiment, video stream 105 is transmitted in a digital format as a stream of video packets 401. Video packet 401 includes, but is not limited to, header 410, packet type 420, and payload 430. Header 410 can include routing information, parity and error correction bits, and the like. Payload type field 420 includes a value representing a payload type of payload 430, wherein payload 430 can include video payload 440, display area format payload 450 and/or display area action payload 460. For example, a value of "0" in payload type field 420 could indicate that payload 430 includes video payload 440, wherein a value of "1" for payload type field 420 could indicate that payload 430 includes display area format payload 450, and so on.

Video payload 440 includes data representing video content 115 (FIG. 1). For example, video payload 440 could include four bytes of data of video content 115. Similarly, display area format payload 450, in one embodiment, includes data representing display area format data 117 (FIG. 1). Display area format payload 450 includes display area ID field 441, location field 442, display properties field 443, action field 444, and/or action information field. As discussed previously, in one embodiment, each of selectable display areas 141-142 (FIG. 1) has a corresponding selectable display area ID used by display module 110 (FIG. 1) to identify each of selectable display areas 141-142. Accordingly, display area ID field 441 includes the selectable display area ID of a corresponding selectable display area 141-142 (FIG. 1).

Action field 444, in one embodiment, includes values representing one or more actions that are associated with the corresponding selectable display area 141-142 (FIG. 1). For example, if display module 110 can perform four actions: 1) display web page content; 2) display a form; 3) display a video clip; and/or 4) play an audio clip; then action field 444 can include a four-bit value, wherein each bit of the four-bit value corresponds to the availability of an action. A value of "0001" could indicate that a single action of playing an audio clip is associated with a certain selectable display area 141-142, whereas a value of "1111" could indicate that all four actions are available to be performed in relation to a certain selectable display area 141-142. Action information field 445, in one embodiment, includes information to be utilised by action execution module 330 to perform the one or more actions associated with one of selectable display areas 141-142, such as a file name of a video clip, a network address of external data source 130 (FIG. 1), a URL of a website, and the like.

As discussed previously, action execution module 330 (FIG. 3), in one embodiment, compares the location of cursor 145 (FIG. 1) on display device 120 with the locations of selectable display areas 141-142 (FIG. 1) on display device 120 (FIG. 1) to determine which one, if any, of selectable display areas 141-142 has been selected by a viewer. Location field 442, in one embodiment, includes a location value corresponding to the one of selectable display areas 141-142 represented by the selectable display area ID of display area ID field 441. The location value of location field 442 can include a coordinate pair and a radius. For example, if the bottom of display device 120 is considered the x-axis and the left side of display device 120 is considered the y-axis, location field 442 for selectable display area 141 (FIG. 1) could include the coordinates (500, 600) with a radius of 10, which can be interpreted as meaning that the centre of selectable display area 141 is 400 pixels above the bottom of display device 120 and 600 pixels to the right to the left side of display device 120. The radius of 10 can be interpreted by action execution module 330 to mean that if the viewer initiates an input using cursor 145 and cursor 145 is within a radius of 10 pixels of the coordinates (500, 600) (the centre of selectable display area 141), then the viewer has selected selectable display area 141. As the location and/or the relative size of selectable display area 141 changes on display device 120, new coordinate values and/or radii can be sent as part of location field 442 of subsequent video packets 401 associated with selectable display area 141.

Alternatively, after a first coordinate pair has been associated with one of selectable display areas 141-142 (FIG. 1) in a first video packet 401, location field 442 of subsequent video packets 401 associated with the selectable display area can include a delta value, where the delta value represents a change in location. Using the previous example, a delta value of (100, -150) included in location field 442 a subsequent video packet 401 could be interpreted by action execution module 330 as meaning that the location of selectable display area 141 on display device 120 has moved from (500, 600) to (600, 450).

Instead of using a single coordinate pair and a radius to represent the location of selectable display areas 141-142, in one embodiment, location field 442 includes a plurality of vertices coordinates of a polygon representative of the a display area corresponding to selectable display area 141-142 (FIG. 1). For example, location field 442 of video packet 401 associated with selectable display area 141 could include the coordinates of (0,0), (0,100), (50, 100), resulting in the display area of selectable display area 141 being represented by an isosceles triangle. In this case, if cursor 145 (FIG. 1) is located proximal to this display area (i.e. within or near the isosceles triangle) when a viewer initiates an input, action execution module 330 (FIG. 3) can determine that the viewer has selected selectable display area 141. Although a number of methods of identifying the location of selectable display areas 141-142 are illustrated herein, other methods may be used without departing from the spirit or the scope of the present invention.

Display properties field 443, in one embodiment, includes format information for the display of selectable display areas 141-142. For example, display properties field 443 could include values indicating the width and colour of border 250 (FIG. 2) of one of selectable display areas 141-142 (FIG. 1), values indicating how cursor 145 (FIG. 1) can change in appearance when cursor 145 is proximal to or over one of selectable display areas 141-142, and the like.

Recall that, in one embodiment, the information (display area action data 121-122, FIG. 1) utilised by action execution module 330 (FIG. 1) to perform an action is included as part of video stream 105. In this case, display area action data 121-122 can be transmitted, in whole or in part, as display area action payload 460. For example, a data file of a video clip can be sent a couple of bytes at a time as display area action payload 450 of a plurality of video packets 401.

Video parser 310, in one embodiment, receives the stream of video packets 401 (one embodiment of video stream 105, FIG. 1), removes header 410 and any superfluous information, and places video payload 430 into the appropriate buffer. Packet parser 470, in one embodiment, determines the payload type of video payload 430 using payload type field 420. Video payloads 440 can be buffered in video content buffer 495 until retrieved by graphics engine as video content 115 (FIG. 1). Display area format payloads 450 can be buffered in display area format buffer 490 until retrieved by action execution module 330 (FIG. 3) and/or graphics engine 340 (FIG. 3) as display area format data 117 (FIG. 1). Display area action payloads 460 can be buffered in action data buffer 480 (or buffer 320, FIG. 3) until retrieved by action execution module 330. Recall that, in at least one embodiment, LUT 331 (FIG. 3) is utilised by action execution module 330. In this case, the values of the various fields of video packet 401 can be used to fill in the fields of LUT 331.

In other embodiments, video stream 105 is transmitted to display module 110 (FIG. 1) in an analog format, such as via a television broadcast or a cable transmission. In this case, display area format data 117 and/or display area action data 121-122 can be embedded within the transmission in a format similar to the format of video packet 401. For example, display area format data 117 and/or display area action data 121-122 could be embedded as Closed Captioning data or Teletext data. Video parser 310, in one embodiment, could include a Closed Captioning decoder or a Teletext decoder to decode the embedded display area format data 117 and/or display area action data 121-122 and process the decoded data using packet parser 470. Other methods of formatting video stream 105 may be used without departing from the spirit or the scope of the present invention.

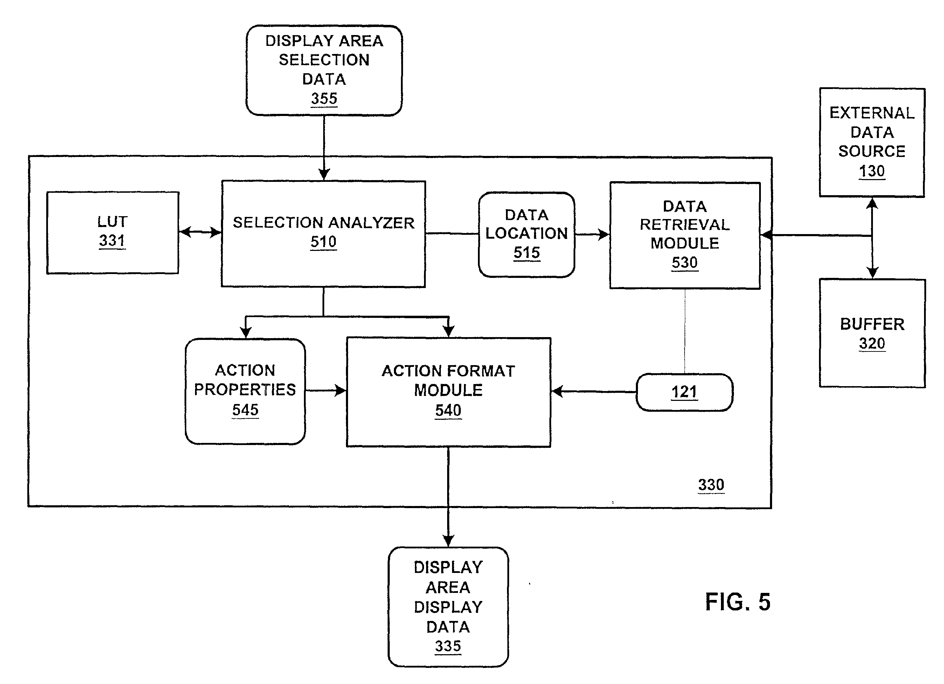

Referring to FIG. 5, action execution module 330 is illustrated in greater detail according to at least one embodiment of the present invention. Action execution module 330 includes selection analyzer 510, look-up table (LUT) 331, data retrieval module 530, and action format module 540. As discussed previously, action execution module 330, in one embodiment, performs an action associated with a selectable display area (selectable display areas 141-142, FIG. 1) selected by a viewer. Selection analyzer 510, in one embodiment, analyses display area selection data 355 (representing a viewer's input) to determine which of one or more selectable display areas 141-142, if any, a viewer has selected. In one embodiment, display area selection data 355 includes the location of cursor 145 (FIG. 1) on display device 120 (FIG. 1) when the viewer initiated an input. As discussed in greater previously, selection analyzer 510 can compare the location of cursor 145 with the locations of selectable display areas 141-142. If cursor 145 is proximal to or over one of selectable display areas 141-142, selection analyzer 510 can use the selectable display area ID to obtain the related action properties 545 from LUT 331. Alternatively, display area selection data can include a selectable display area ID that selection analyzer 510 can use to obtain the related action properties 545. Action properties 545 associated with selectable display areas 141-142 can include types of actions performed, locations of data sources to provide information utilised to perform an action, format information for the results of a performed action, and the like. For ease of illustration, an example wherein selectable display area 141 is selected is discussed.

Selection analyzer 510, in one embodiment, determines an action, associated with selectable display area 141 (FIG. 1), to perform using LUT 331. In cases where multiple actions are associated with the selected selectable display area 141, display area selection data 355 can include a reference to which of action of the plurality of actions is to be performed. Selection analyzer 510 also can use LUT 331 to determine a location of information (display area action data 121, FIG. 1) needed to perform the selected action, referred to herein as data location 515. In one embodiment, display area action data 121 is included as part of video stream 105 (FIG. 1). In this case, display area information data 121 can be stored in buffer 320. Accordingly, in this case, data location 515 can include a location of buffer 320 where display area action data 121 is stored. In another embodiment, display area action data 121 is stored remotely in external data source 130. For example, display area action data 121 could include web page content stored on a web server (external data source 130). In this case, data location 515 can include a location or address of external data source 130, such as a URL, a network address, a storage device address, and the like. Data retrieval module 530, in one embodiment, uses data location 515 to retrieve the information (display area action data 121) utilised to perform the designated action. For example, data retrieval module 530 could include an interface to a bus connected to buffer 320. Alternately, when data location 515 includes a location remote to action execution module 330, data retrieval module 530 can include a network interface, a disk controller, and the like, as appropriate.

Action format module 540, in one embodiment, performs the selection action using display area action data 121 and action properties 545. For example, the selected action could include the display of a video clip (display area action data 121) in pop-up window 240 (FIG. 2) of display device 120 (FIG. 1). Accordingly, action format module 540 can set the display properties of the video clip (included in action properties 545) and determine the commands needed by graphics engine 340 (FIG. 3) to generate pop-up window 240. The video clip (display area action data 121) and the commands could then be sent to graphics engine 340 as display area display data 335. Alternately, the action to be performed can include the display of the content of a website (external source 130, FIG. 1). If action properties 545 indicated that only the text portion of the website is to be displayed in information bar 210 (FIG. 2), action format module 540 can then strip all non-text content, such as images, and convert the remaining text content into an appropriate format. The converted text, along with commands to place the converted text into information bar 210, could be output as display area display data 335. Graphics engine 340 can then use display area display data 335, in conjunction with video content 115 (FIG. 1) to generate display data 125, as discussed previously.

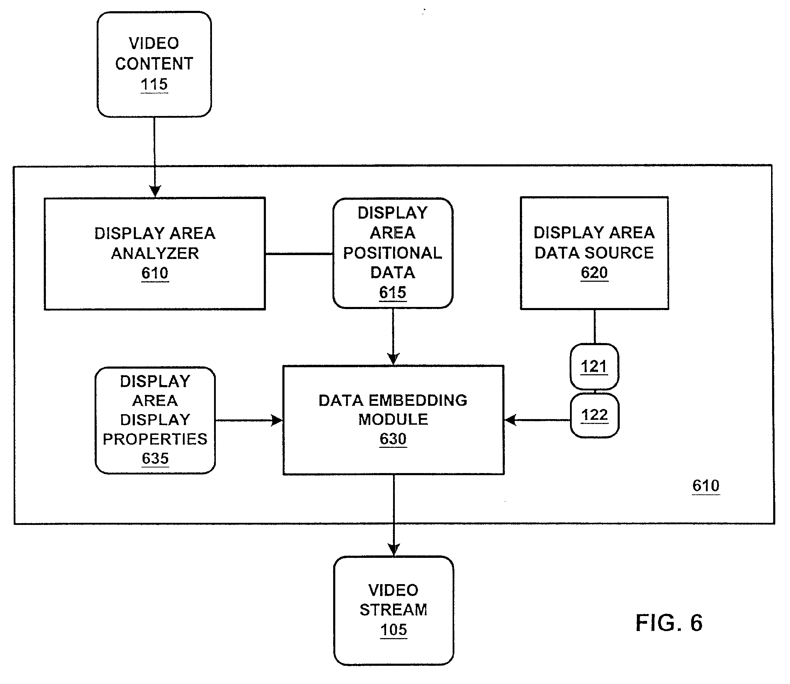

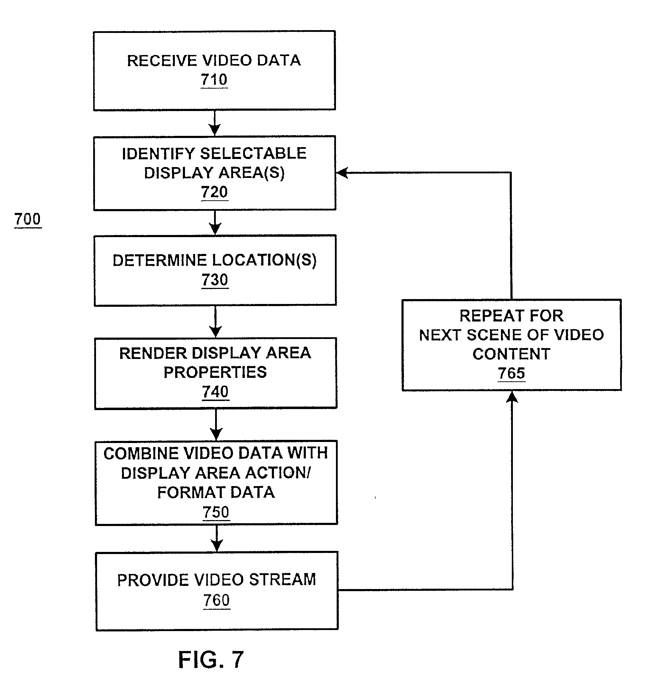

Referring next to FIGS. 6 & 7, a system and method for generating video stream 105 is illustrated according to at least one embodiment of the present invention. Video stream generator 610, in at least one embodiment, is utilised to generate video stream 105 based on video content 115. Video stream generator 610 includes display area analyzer 610, display area data source 620, and data embedding module 630. Video stream generation method 700 initiates with step 710, wherein video content 115 is received by display area analyzer 610. Video content 115, in one embodiment, includes a fixed sequence of scenes having one or more selectable display areas 141-142 (FIG. 1), such as a movie, a television program, a televised event, and the like. Selectable display areas 141-142 can include a variety of display areas within a scene of video. For example, advertisers could pay television broadcasters to advertise their products using product placement in the scenes of video content 115. To illustrate, a shoe manufacturing company could pay a television producer to have the actors of television programs wear the shoes manufactured by the company and to make information about the shoes, such as information from the company's website, available to viewers as they watch the television program using an embodiment of the present invention. In this case, the plurality of selectable display areas 141-142 includes the advertisers' products, such as the shoes on the actors.

In step 720, display area analyzer 610, in one embodiment, identifies one or more of selectable display areas 141-142 (FIG. 1) in one scene of the fixed sequence of scenes of video content 115. A scene can include a single frame, a sequence of frames of video, and the like. The one or more selectable display areas 141-142, in one embodiment, are identified manually for each scene of video content 115. For example, an operator of video stream generator 610 could visually analyse a frame of a scene of video content 115 to identify selectable display area 141 in each frame. In step 730, the operator can then mark the location of selectable display area 141 using centre coordinates and a radius, vertices of a polygon representing a display area corresponding to the selectable display area, and the like. Alternatively, in one embodiment, the selected selectable display area is identified in a frame of video content 115 using pattern recognition software in step 720. In one embodiment, the pattern recognition software, similar to common face-recognition software, searches each frame of video content 115 for pixel patterns representative of the selected selectable display area and marks its location when found. The location (display area positional data 615) of the selected selectable display areas for each of the one or more selectable display areas 141-142 can be output in step 730 to data embedding module 630 as display area positional data 615.

Recall that, in one embodiment, video content 115 is provided to display module 110 (FIG. 1) with visual indicators, such as border 250, already associated with one or more selectable display areas 141-142 (FIG. 1). Accordingly, in step 740, data embedding module 630 integrates the display properties (display area display properties 635) of the one or more selectable display areas 141-142 into video content 115. Accordingly, when video content 115 is displayed on display device 120 (FIG. 1), the visual indicators associated with selectable display areas 141-142 will already be present with minimal or no additional rendering by graphics engine 340 (FIG. 3).

In step 750, data embedding module 630, in one embodiment, combines display area positional data 615 with video content 115 to generate video stream 105, where display area positional data 615 is included as part of display area format data 117 (FIG. 1). Likewise, in one embodiment, information (display area action data 121-122, FIG. 1) utilised by action execution module 330 (FIG. 3) is included as part of video stream 105 in step 750. Accordingly, data embedding module 630 can embed display area action data 121-122 in video stream 105. Display area action data 121-122, in one embodiment, is obtained from display area data source 620, where display area data source 620 can include a data server, a database, a hard disc, and the like. For example, an advertiser may desire to have a 3-D image (display area action data 121) of its product displayed on display device 120 (FIG. 1) when a viewer selects the advertiser's product (selectable display area 141) from a scene of a television program (video content 115). Accordingly, the advertiser could provide an operator with a compact disc (CD) that has the advertising image stored as a file on the compact disc. The operator could then place the CD in a CD reader (display area data source 620) and retrieve the file from the CD and embed the data contained in the file as display area action data 121 in video stream 105.

In step 760, video stream 105, in one embodiment, is provided to display module 110 (FIG. 1) in a digital format, such as data transmitted over a network. In this case, data embedding module 630 can format video stream 105 into video packets 401 (FIG. 4) as discussed previously with reference to FIG. 4. In another embodiment, video stream 105, in step 760, is provided to display module 110 in an analog format. In this case, data embedding module 630 could embed data into video stream 105 as Closed Captioning data or Teletext data. For example, data embedding module 630 could include a line 21 encoder that encodes display area positional data 615, display area display properties 635, and display area action data 121 into line 21 during the vertical blanking interval of a television or cable transmission (video stream 105). In step 765, steps 720-760 are repeated for the next scene of video content 115, as necessary. It will be appreciated that some of the data associated with selectable display areas 141-142 may not need to be transmitted as part of video stream 105 each time a frame of video content 115 is processed. For example, the actions associated with selectable display areas 141-142 generally do not change from frame to frame, nor does some of the information, such as a network address of a data server (external data source 130, FIG. 1), utilised by action execution module 330 to perform an action. Accordingly, the video stream 105 may contain more data for some frames compared to others. Other methods of embedding data in video stream 105 may be implemented without departing from the spirit or the scope of the present invention.

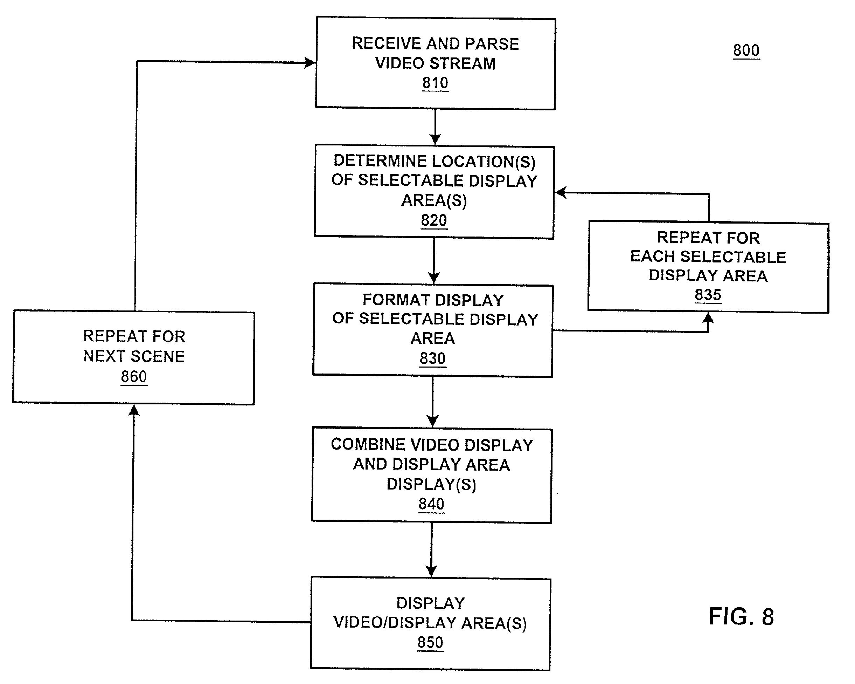

Referring to FIG. 8, a method for displaying video content having one or more selectable display areas on a display is illustrated according to at least one embodiment of the present invention. Display method 800 initiates with step 810, wherein video stream 105 (FIG. 1) is received by display module 110 (FIG. 1) and parsed by video parser 310 (FIG. 3). Video stream 105 can be transmitted in digital format as video packets 401 (FIG. 4) or in an analog format, such as a television broadcast or satellite broadcast. In this case, components, such as display area format data 117 (FIG. 1) and display area action data 121-122 (FIG. 1) can be embedded as Closed Captioning data or Teletext data. Video parser 310, in one embodiment, parses video stream into video content 115 (FIG. 1) and display area format data 117. In embodiments wherein display area action data 121-122 is included with video stream 105, video parser 310 can also parse display area action data 121-122 from video stream 105.

In step 820, the positional properties of one of selectable display areas 141-142 (FIG. 1) for a frame of video content 115 (FIG. 1) are determined. For example, selection analyzer 510 (FIG. 5) of action execution module 330 (FIG. 3) could record the location, such as a coordinate pair and a radius or a set of vertices, of the selected selectable display area for the frame of video in LUT 331 (FIG. 3), as determined from display area format data 117 (FIG. 1). In step 830, the display properties of one of selectable display areas 141-142 are formatted, if necessary, for display on display device 120 (FIG. 1). Graphics engine 340 (FIG. 3), in one embodiment, utilises the display properties included as part of display area format data 117 to modify the display of the selected selectable display area on display device 120. For example, display area format data 117 can indicate that selectable display area 141 is to be displayed with a grey border 250 (FIG. 2) on display device 120. Accordingly, graphics engine 340 could add grey border 250 to selectable display area 141 before it is displayed on display device 120 in step 830. Recall that, in one embodiment, the display properties of selectable display areas 141-142 have already been modified to include a visual indicator, such as border 250, before video stream 105 is provided to display module 110. Accordingly, in this case, step 830 may be omitted. Steps 820-830 are repeated in step 835 for each of the one or more selectable display areas 141-142 included in the frame of video content 115.

In step 840, graphics engine 340 (FIG. 3) combines the frame of video content 115 (FIG. 1) with any display modifications, such as the addition of visual indicators, made to selectable display areas 141-142 (FIG. 1) and renders the results to generate display data 125 (FIG. 1) in step 830. Recall that video content 115, in one embodiment, includes a fixed sequence of scenes that are generated without user input. Additionally, if the results (display area display data 335, FIG. 3) of an action performed by action execution module 330 (FIG. 3) are ready for display, display area display data 335 is combined with video content 115 and to generate display data 125. For example, an action performed can include the retrieval of a video clip associated with selectable display area 141 to be displayed in pop-up widow 240 (FIG. 2) with selectable display area 141 to be displayed in pop-up window 240 (FIG. 2). In this example, display area display data 335 could include the data for the frame of the video clip and a command or code that directs graphics engine 340 (FIG. 3) to display the frame of the video clip in pop-up window 240. In step 850, a frame of video (display data 125) that includes a frame of video content 115, any display modifications made to selectable display areas 141-142 in the frame, and/or a frame's worth of the results of an action performed by action execution module 330 is transmitted to display device 120 for display. In step 860, steps 810-850 are repeated for the next scene of video content 115.

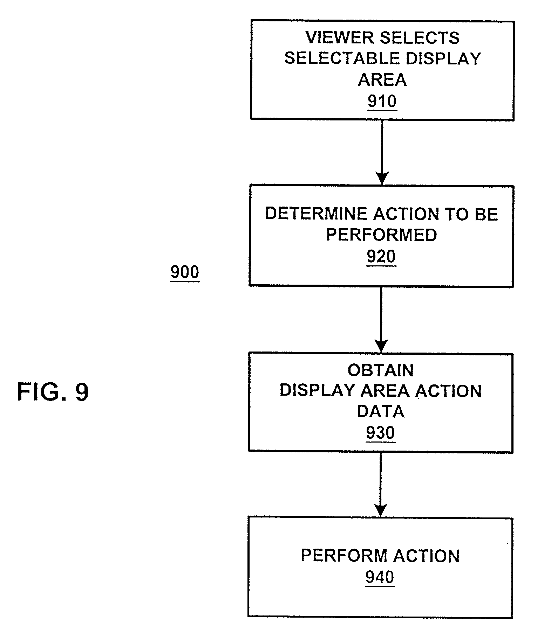

Referring now to FIG. 9, a method for performing an action associated with a selectable display area selected by a viewer is illustrated according to at least one embodiment of the present invention. Action performance method 900 initiates with step 910, wherein a viewer selects one of selectable display areas 141-142 (FIG. 1) from display device 120. As discussed previously, cursor 145 (FIG. 1) may be used to select one of selectable display areas 141-142. In this case, the location of cursor 145 (viewer input 135, FIG. 1) is compared to the locations of one or more of selectable display areas 141-142. For example, in one embodiment, selection analyzer 510 (FIG. 5) compares the coordinates of cursor 145 to the centre coordinates of selectable display areas 141-142. If the coordinates of cursor 145 are collocated within a circle defined by a specified radius and a centre coordinate of one of selectable display areas 141-142, selection analyzer 510 can assume that the selectable display area has been selected by the viewer. Alternately, a plurality of vertices can be used to describe the location of selectable display areas 141-142. If the location of cursor 145 is to fall within a display area represented by the plurality of vertices associated with one of selectable display areas 141-142, that selectable display area can be assumed to be selected when a viewer initiates an input, such as by clicking the left button of mouse 162 (FIG. 1). Similarly, in one embodiment, selectable display areas 141-142 can be represented by icons 221-222 (FIG. 2) in icon bar 220 (FIG. 2). In this case, the location of cursor 145 can be compared to the locations of icons 221-222 to determine which one of selectable display areas 141-142 the viewer has selected.

Alternatively, in one embodiment, selectable display areas 141-142 are represented by a list displayed on a portion of display device 120, such as information bar 210 (FIG. 2) or pop-up menu 240 (FIG. 2) of display device 120 (FIG. 1). In this case, a viewer could enter a number on a keypad of remote control 161 (FIG. 1) or keyboard 163 (FIG. 1) to select one of selectable display areas 141-142 associated with the entered number. Likewise, the viewer could scroll through the list to select one of selectable display areas 141-142. Other methods of selecting a selectable display area may be used without departing from the spirit or the scope of the present invention.

In step 920, an action associated with the selected selectable display area 141-142 (FIG. 1) is determined. In one embodiment, multiple actions are available for selection by a viewer. In this case, a list of the available actions could be listed on display device 120 (FIG. 1), such as in information bar 210 (FIG. 2), and the viewer could enter a number corresponding to using the keypad of remote control 161 (FIG. 1) or keyboard 163 (FIG. 1) or scroll through the list to select the action. In another embodiment, only one action is associated with the selected selectable display area 141-142 and is therefore selected by default. The actions available to the selected selectable display area 141-142, in one embodiment, are determined by action execution module 330 (FIG. 3) based on display area format data 117 (FIG. 1) stored in LUT 331 (FIG. 3).

In at least one embodiment, additional information or data could be needed to perform the selected action. For example, the selected action could include the display of the content of a website, the display of a form, the display of an image, the display of text, the display of a video clip, the playing of an audio clip, and the like. It will be appreciated that the information to be displayed must be obtained before it is displayed. Accordingly, in step 930, any additional data (display area action data 121-122, FIG. 1) needed to perform the selected action is obtained. In one embodiment, display area action data 121-122 is included as part of video stream 105 (FIG. 1). In this case, display area action data 121-122 can be parsed from video stream 105 by video parser 310 (FIG. 3) and placed in buffer 320 (FIG. 3). Accordingly, in this case, step 930 includes the retrieval of action data 121-122 from buffer 320. In other embodiments, display area action data 121-122 is stored with external data source 130 (FIG. 1). For example, display area action data 121-122 could include the content of a website hosted by a web server (external data source 130). In this case, step 930 includes the retrieval of action data 121-122 from external data source 130. In one embodiment, an external data request, such as external data request 151 (FIG. 1) associated with selectable display area 151, is transmitted by data retrieval module 530 (FIG. 3) to external data source 130. External data source 130, upon receiving the external data request, transmits display area action data 121 back to data retrieval module 530. The location, such as a URL, network address, or device address, in one embodiment, is supplied as part of display area format data 117 (FIG. 1), such as part of action information field 445 (FIG. 4) of display area format payload 450 (FIG. 4).

In step 940, the selected action is performed. As discussed previously, various examples of actions to be performed include displaying text, displaying web page content, displaying 2-D and 3-D images, displaying a video clip, playing an audio file, and the like. In embodiments wherein the selected action to be performed includes the display of information, the information, such as a video clip, web page content, images, and the like, is formatted for display by graphics engine 340 and displayed on display device 120 (FIG. 1). In one embodiment, the displayed information is displayed in a section of display device 120, such as in pop-up window 240 (FIG. 2) or information bar 210 (FIG. 2). In another embodiment, the displayed information is displayed in a display device 120 separate from the display device 120 used to display video content 115 (FIG. 1). Additionally, in one embodiment, the display of video content 115 is paused while the results from the performed action are being displayed or output. For example, to keep the viewer from missing part of a live television program (video content 115) being displayed when a viewer selects one of selectable display areas 141-142 to have an action performed, the television program can be paused and buffered while the results of the action are displayed. Once the viewer exits the display of the results, the buffered television program is started again from the point where it was paused, resulting in a time-shifting of the television program while allowing the viewer to view information about the selected selectable display area.

The various functions and components in the present application may be implemented using an information handling machine such as a data processor, or a plurality of processing devices. Such a data processor may be a microprocessor, microcontroller, microcomputer, digital signal processor, state machine, logic circuitry, and/or any device that manipulates digital information based on operational instruction, or in a predefined manner. Generally, the various functions, and systems represented by block diagrams are readily implemented by one of ordinary skill in the art using one or more of the implementation techniques listed herein. When a data processor for issuing instructions is used, the instruction may be stored in memory. Such a memory may be a single memory device or a plurality of memory devices. Such a memory device may be read-only memory device, random access memory device, magnetic tape memory, floppy disk memory, hard drive memory, external tape, and/or any device that stores digital information. Note that when the data processor implements one or more of its functions via a state machine or logic circuitry, the memory storing the corresponding instructions may be embedded within the circuitry that includes a state machine and/or logic circuitry, or it may be unnecessary because the function is performed using combinational logic. Such an information handling machine may be a system, or part of a system, such as a computer, a personal digital assistant (PDA), a hand held computing device, a cable set-top box, an Internet capable device, such as a cellular phone, and the like.

One of the implementations of the invention is as sets of computer readable instructions resident in the random access memory of one or more processing systems configured generally as described in FIGS. 1-9. Until required by the processing system, the set of instructions may be stored in another computer readable memory, for example, in a hard disk drive or in a removable memory such as an optical disk for eventual use in a compact disc (CD) drive or digital versatile disc (DVD) drive or a floppy disk for eventual use in a floppy disk drive. Further, the set of instructions can be stored in the memory of another processing system and transmitted over a local area network or a wide area network, such as the Internet, where the transmitted signal could be a signal propagated through a medium such as an ISDN line, or the signal may be propagated through an air medium and received by a local satellite to be transferred to the processing system. Such a signal may be a composite signal comprising a carrier signal, and contained within the carrier signal is the desired information containing at least one computer program instruction implementing the invention, and may be downloaded as such when desired by the viewer. One skilled in the art would appreciate that the physical storage and/or transfer of the sets of instructions physically changes the medium upon which it is stored electrically, magnetically, or chemically so that the medium carries computer readable information. The preceding detailed description is, therefore, not to be taken in a limiting sense, and the scope of the present invention is defined only by the appended claims.

In the preceding detailed description of the figures, reference has been made to the accompanying drawings which form a part thereof, and in which is shown by way of illustration specific embodiments in which the invention may be practised. These embodiments are described in sufficient detail to enable those skilled in the art to practice the invention, and it is to be understood that other embodiments may be utilised and that logical, mechanical, chemical, and electrical changes may be made without departing from the spirit or scope of the invention. To avoid detail not necessary to enable those skilled in the art to practice the invention, the description may omit certain information known to those skilled in the art. Furthermore, many other varied embodiments that incorporate the teachings of the invention may be easily constructed by those skilled in the art. Accordingly, the present invention is not intended to be limited to the specific form set forth herein, but on the contrary, it is intended to cover such alternatives, modifications, and equivalents, as can be reasonably included within the spirit and scope of the invention. The preceding detailed description is, therefore, not to be taken in a limiting sense, and the scope of the present invention is defined only by the appended claims.

## Claims

1. A method comprising the steps of:
providing a fixed sequence of scenes to be displayed, at least one scene of the fixed sequence of scenes including at least a first selectable display area;
receiving data indicating that the first selectable display area has been selected; and,
performing a first action associated with the first selectable display area based on the received data.

2. A method according to Claim 1, in which the fixed sequence of scenes is included in a video stream.

3. A method comprising the steps of:
identifying a first selectable display area within a video scene;
determining a first location of the first selectable display area within the video scene; and,
embedding, in a video stream, the video scene and the first location.

4. A method according to Claim 3, further including the step of providing the video stream to a viewer.

5. A method according to Claim 3 or Claim 4, further including the step of embedding, in the video stream, information associated with the first selectable display area, wherein the information is provided to the viewer upon selection of the first selectable display area.

6. A method according to Claim 1, wherein the step of performing the first action includes enabling a display of at least a portion of the information associated with the first selectable display area.

7. The method according to Claim 6, in which at least a portion of the information associated with the first selectable display area is included or embedded in a video stream.

8. A method according to any one of Claims 5 to 7, wherein the step of embedding information includes retrieving information from an external data source.

9. A method according to any one of Claims 5 to 8, wherein information includes at least one of one of text data, 2-D image data such as a video clip, 3-D image data, a content of a website, audio data such as an audio clip, or form data.

10. A method according to any one of Claims 5 to 9, wherein enabling a display of information associated with the first selectable display area includes providing the information associated with the first selectable display area.

11. A method according to any one of Claims 5 to 9, wherein enabling a display of information associated with the first selectable display area includes retrieving the information associated with the first selectable display area from an external data source.

12. A method according to any one of Claims 5 to 11, wherein the fixed sequence of scenes or video scenes is provided to a first display device and the information associated with the first selectable display area is provided to a second display device different from the first display device.

13. A method according to Claim 1 or any claim dependent thereon,
wherein the step of performing the first action includes obtaining information from a viewer.

14. A method according to Claim 13, wherein the step of obtaining information includes displaying a form to be filled out by the viewer.

15. A method according to Claim 15, wherein the data received from the viewer includes a location of a cursor used to select the first selectable display area.

16. A method according to Claim 15, wherein the location of the cursor is compared with a location of the first selectable display area, and where the first selectable display area is considered selected by the viewer when the cursor and the first selectable display area are collocated.

17. A method according to any one of the preceding claims, wherein a first visual indicator is used to indicate that the first selectable display area is available or selectable.

18. A method according to Claim 17, wherein the first visual indicator includes at least one of: a border around the first selectable display area, a display area indicator, an icon representative of the first selectable display area, a change in a display characteristic of the first selectable display area or a change in a display characteristic of a cursor used to select the first selectable display area.

19. A method according to Claim 18, wherein the first visual indicator includes a change in at least one of a colour, a size, or a luminance.

20. A method according to Claim 1 or Claim 5 or any claim dependent upon Claim 1 or Claim 5, further including the steps of:
pausing the display of the fixed sequence of scenes or video stream before the first action is performed; and,
resuming the display of the fixed sequence of scenes or video stream after the first action is performed.

21. A method according to any one of the preceding claims, further including the step of selecting a first action to be performed from a plurality of actions associated with the first selectable display area.

22. A method according to any one of the preceding claims, further including the steps of:
receiving data indicating that a second selectable display area has been selected; and,
performing a first action associated with the second selectable display area based on the received data.

23. A method according to Claim 1 or any claim dependent thereon, wherein the step of receiving data includes the steps of:
identifying a location of a cursor on a display device used to display the fixed sequence of scenes, wherein the cursor is used to select the first selectable display area;
identifying a location of the first selectable display area on the display device; and,
comparing the location of the cursor with the location of the first selectable display area to determine if the cursor is proximal to the first selectable display area.

24. A method according to Claim 23, wherein the location of the cursor includes a first coordinate pair and the location of the first selectable display area includes a second coordinate pair, and the cursor is determined to be proximal to the first selectable display area when the first coordinate pair is within a specified radius of the second coordinate pair.

25. A method according to Claim 23, wherein the location of the cursor includes a first coordinate pair and the location of the first selectable display area includes a plurality of coordinate pairs, where the plurality of coordinate pairs represent a polygon used to describe a display area of the first selectable display area, and the cursor is determined to be proximal to the first selectable display area when the first coordinate pair is within an area represented by the polygon.

26. A method according to Claim 3 or any claim dependent thereon, wherein the step of determining a first location includes the steps of:
identifying a first coordinate pair, the first coordinate pair corresponding to a centre of the first selectable display area within the video scene; and
determining a first radius;
wherein the first radius and the first coordinate pair describe a display area associated with the first selectable display area.

27. A method according to Claim 26 wherein the step of identifying a first location includes identifying a plurality of coordinate pairs, wherein the plurality of coordinate pairs correspond to a plurality of vertices of a polygon describing a display area associated with the first selectable display area.

28. A method according to Claim 26 or Claim 27, further including the steps of:
identifying a second selectable display area within the video scene;
determining a first location of the second selectable display area within the video scene; and
embedding, in the video stream, the first location of the second selectable display area.

29. A system comprising:
an interface to receive a fixed sequence of scenes of a video stream, wherein at least one scene of said fixed sequence of scenes includes at least a first selectable display area;
a graphics engine to render said fixed sequence of scenes for display;
a viewer input module to receive a viewer input, wherein said viewer input includes a selection of a first action associated with said first selectable display area; and,
an action execution module to perform said first action.

30. A system according to Claim 29, further including a display device to display said fixed sequence of scenes.

31. A system according to Claim 29 or Claim 30, wherein said first action includes enabling a display of information associated with said first selectable display area.

32. A system according to Claim 31, wherein said information includes at least one of: text data, 2-D image data such as a video clip, 3-D image data, a content of a website, audio data such as an audio clip, or form data.

33. A system according to Claim 31 or Claim 32, wherein said action execution module is further to retrieve at least a portion of said information from an external data source.

34. A system according to any one of Claims 31 to 33, wherein said video stream further includes at least a portion of said information to be displayed.

35. A system according to any one of Claims 29 to 34, wherein a first visual indicator is used to indicate the presence of said first selectable display area.

36. A system according to Claim 35, wherein the first visual indicator includes at least one of: a border around the first selectable display area, a display area indicator, an icon representative of the first selectable display area, a change in a display characteristic of the first selectable display area, or a change in a display characteristic of a cursor used to select the first selectable display area.

37. A system according to any one of Claims 29 to 36, wherein said action execution module includes a selection analyzer, wherein said selection analyzer is to:
identify a location of a cursor on a display device used to display said fixed sequence of scenes, wherein the cursor is used to select said first selectable display area;
identify a location of said first selectable display area on the display device; and
compare the location of the cursor with the location of said first selectable display area to determine if the cursor is proximal to said first selectable display area.

38. A system according to Claim 37, wherein the location of the cursor includes a first coordinate pair and the location of the first selectable display area includes a second coordinate pair, and the cursor is determined to be proximal to the first selectable display area when the first coordinate pair is within a specified radius of the second coordinate pair.

39. A system according to Claim 37, wherein the location of the cursor includes a first coordinate pair and the location of the first selectable display area includes a plurality of coordinate pairs, where the plurality of coordinate pairs form a polygon representative of a display area associated with said first selectable display area on the display, and the cursor is determined to be proximal to said first selectable display area when the first coordinate pair is located within the display area represented by the polygon.

40. A computer program including instructions to manipulate a processor to:
provide a fixed sequence of scenes to be displayed, wherein at least one scene of the fixed sequence of scenes including at least a first selectable display area;
receive data indicating that the first selectable display area has been selected; and,
perform a first action associated with the first selectable display area based on the input.

41. A computer program according to Claim 40, wherein instructions to manipulate said processor to perform the first action include instructions to manipulate said processor to enable a display of at least a portion of the information associated with the first selectable display area.

42. A computer program according to Claim 40 or Claim 41, wherein a first visual indicator is used to indicate an availability of the first selectable display area to be selected.

43. A system comprising:
a processor;
memory operably coupled to said processor; and
a program of instructions according to any one of Claims 40 to 42 to be stored in said memory and executed by said processor, said program of instructions including instructions to manipulate said processor.

44. A computer readable medium including a computer program according to any one of Claims 40 to 42.
